(19) Europäisches Patentamt

European Patent Office

Office européen des brevets

(11) **EP 0 624 665 B1**

(12) **EUROPÄISCHE PATENTSCHRIFT**

(45) Veröffentlichungstag und Bekanntmachung des Hinweises auf die Patenterteilung:
**20.01.1999   Patentblatt 1999/03**

(51) Int Cl.⁶: **D01D 5/18**

(21) Anmeldenummer: **94106962.7**

(22) Anmeldetag: **04.05.1994**

(54) **Verfahren und Vorrichtung zur Herstellung von Fasern nach einem Zentrifugalspinnverfahren**

Method and apparatus for the manufacture of fibres by a centrifugal spinning process

Procédé et dispositif pour la production de fibres selon un procédé de filage par centrifugation

(84) Benannte Vertragsstaaten:
**BE CH DE ES FR GB IT LI NL**

(30) Priorität: **11.05.1993   DE 4315609**

(43) Veröffentlichungstag der Anmeldung:
**17.11.1994   Patentblatt 1994/46**

(73) Patentinhaber: **BASF Aktiengesellschaft**
**67063 Ludwigshafen (DE)**

(72) Erfinder:
• **Voelker, Heinz, Dr.**
**D-67117 Limburgerhof (DE)**

• **Zettler, Hans Dieter**
**D-67269 Gruenstadt (DE)**
• **Fath, Wolfgang, Dr.**
**D-69493 Hirschberg (DE)**
• **Berbner, Heinz**
**D-69509 Moerlenbach (DE)**

(56) Entgegenhaltungen:
EP-A- 0 017 510          EP-A- 0 019 383
DE-A- 2 810 535          GB-A- 2 093 400

**Beschreibung**

Die Erfindung betrifft ein Verfahren und eine Vorrichtung zur Herstellung von Fasern nach einem Zentrifugalspinnverfahren.

Zur Herstellung von Fasern, insbesondere aus Aminoplastharzen, sind verschiedene Verfahren bekannt.

Die GB-A-11 41 201 beschreibt die Herstellung von Fasern ausgehend von einer Harzmasse, die zwischen Flächen eines Bandpaares gebracht wird. Anschließend werden die Bandflächen voneinander entfernt und dadurch Fasern gebildet.

In der DE-A-23 64 091 wird ein Verfahren zur Herstellung flammfester und thermisch unschmelzbarer Melaminharz-Fasern beschrieben, bei dem eine Lösung eines Melamin-Aldehyd-Vorkondensats in eine erhitzte Atmosphäre versponnen wird und dabei gleichzeitig das Lösungsmittel verdampft und das Vorkondensat aushärtet.

In der DE-A-28 10 535 wird ein Verfahren zur Herstellung von Fasern aus einem wärmehärtbaren Formaldehydharz nach dem Zentrifugalspinnverfahren beschrieben, bei dem die Fasern im Gleichstrom mit kalter, feuchter Luft gebildet werden. Hierzu wird ein kalter, feuchter Luftstrom derart in Richtung auf die Schleudertrommel nach unten gelenkt, daß mindestens ein Teil dieses Luftstromes mit der Mischung aus Harz und Katalysator in die Schleudertrommel eintritt, so daß der Luftstrom einem Austrocknen und einer Reaktion der Mischung entgegenwirkt, solange sie sich in der Schleudertrommel (auch Schleuderteller genannt) befindet. Die Fasern werden von der Schleudertrommel her ersponnen, während sie in dem kalten, feuchten Luftstrom, in dem sie verfeinert werden, mitgerissen werden. Anschließend werden die verfeinerten Fasern durch einen warmen, trockenen Luftstrom der von unterhalb der Schleudertrommel her und von dieser weg nach außen strömt, auf 50 bis 100°C erhitzt und gesammelt.

Diese Verfahren weisen eine Reihe von Nachteilen auf. So müssen teilweise sehr niedrig viskose Lösungen versponnen werden. Dabei werden spröde, kurze Fasern erhalten, die nicht zur Vlies- oder Gewebeherstellung verwendet werden können. Werden dagegen hochviskose Lösungen verwendet und diese bei höheren Temperaturen zu Fasern versponnen, so treten bei dem Faserziehvorgang starke Verklebungen auf und die Gefahr des Strahlzerfalls ist sehr groß.

Bei dem Verfahren der DE-A-28 10 535, das mit kalter, feuchter Luft arbeitet, treten ebenfalls wegen der langen Verweilzeit in feuchter Atmosphäre vor dem Trocknungsvorgang starke Verklebungen der Fasern auf. Diese Faserbündel können nicht mehr vereinzelt werden und führen zu spröden, brüchigen, dicken Fasern, die bei der Verarbeitung zu Vliesen und Garnen große Probleme bereiten.

In den bekannten Verfahren werden die Fasern durch eine Gerinneströmung gebildet. Unter Gerinneströmung versteht man hierbei, daß der die Fasern bildende Harzstrom beim Erspinnen der Fasern nicht den gesamten Düsenquerschnitt ausfüllt.

Der Erfindung lag die Aufgabe zugrunde, ein Verfahren und eine Vorrichtung zur Herstellung von Fasern nach einem Zentrifugalspinnverfahren zu entwickeln, mit dem insbesondere elastische, gleichmäßige, schwer entflammbare Fasern mit hohem Festigkeitsniveau auf der Basis von Melamin-Formaldehyd-Harzen erhalten werden können und das die vorgenannten Nachteile nicht aufweist.

Diese Aufgabe wurde erfindungsgemäß gelöst, durch ein Verfahren zur Herstellung von Fasern durch Verspinnen eines Harzes nach einem Zentrifugalspinnverfahren, wobei eine Harzlösung mit einer Viskosität von 50 bis 200 Pa·s bei der Spinntemperatur einem Schleuderteller zugeführt wird und die Harzlösung im Schleuderteller unter einem Druck steht, der ausreicht, daß die Düsen des Schleudertellers beim Erspinnen der Fasern vollständig damit gefüllt sind.

Gegenstand der Erfindung ist außerdem eine Vorrichtung zur Herstellung von Fasern nach dem Zentrifugalspinnverfahren mit einer Zufuhrleitung 3 für das Harz, einem Schleuderteller 1 und einer Antriebswelle 2 für den Schleuderteller, wobei die Zufuhrleitung 3 für das Harz in der Antriebswelle 2 angeordnet ist.

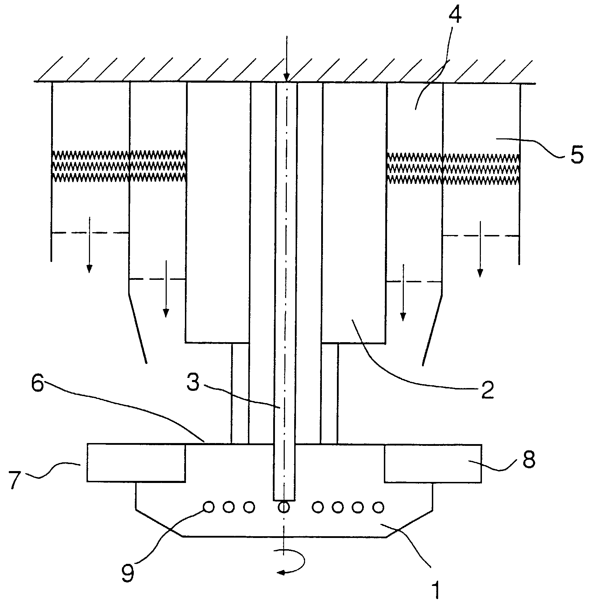

Das erfindungsgemäße Verfahren wird im folgenden anhand der in der Figur gezeigten bevorzugten Vorrichtung zur Durchführung des Verfahrens illustriert. In der Figur bezeichnet 1 einen Schleuderteller, 2 eine Antriebswelle für den Schleuderteller, 3 eine Zufuhrleitung für die Harzlösung, 4 und 5 konzentrisch um die Antriebswelle angeordnete Schächte für die Zufuhr trockener Luft, 6 eine Überlaufbohrung, 7 bzw. 8 am Schleuderteller angeordnete Flügel und 9 eine Düse.

Im erfindungsgemäßen Verfahren werden die Fasern aus Düsen mit vollständig mit Harz gefülltem Düsenquerschnitt ersponnen. Dazu ist zur Überwindung des Druckverlustes in der Düse ein Druck p vor der Düse 9 im Schleuderteller 1 notwendig.

Das Erspinnen der Fasern aus Düsen mit vollständig mit Harz gefülltem Düsenquerschnitt erfolgt vorzugsweise bei einem Druck p des Harzes von 10 bis 80 bar, vorzugsweise 20 bis 70 bar und besonders bevorzugt von 30 bis 55 bar. Der Druck p vor den Düsen 9 im Schleuderteller 1 läßt sich gemäß Gleichung I,

$$p \;=\; 0,5 \cdot \varrho \cdot v^2 \;\cdot\; \left[ 1 - \left( \frac{D_i}{D_a} \right)^2 \right] \qquad\qquad \text{I}$$

aus der Dichte $\rho$ der Harzlösung, der Umfangsgeschwindigkeit v, sowie dem Innendurchmesser $D_i$ und dem Außendurchmesser $D_a$ des entstehenden Flüssigkeitsringes im Schleuderteller 1 berechnen.

Der Druck p im Schleuderteller 1 wird im allgemeinen durch Zentrifugalkräfte aufgebaut. Dabei stellt sich ein Gleichgewicht zwischen Füllstand und dem Massenstrom durch die Düsen in Abhängigkeit von der Schleudertellergeometrie, der Drehzahl und den Stoffeigenschaften des Harzes, vornehmlich Dichte und Viskosität, ein.

Der Druck p wird während des Verfahrens vorzugsweise konstant gehalten.

Das erfindungsgemäße Verfahren wird im allgemeinen unter Verwendung von Düsen 9 mit einem Durchmesser von 0,1 bis 1 mm, vorzugsweise von 0,4 bis 0,6 mm, einer Drehzahl von 10000 bis 25000 U/min, vorzugsweise von 16000 bis 20000 U/min, und einer Viskosität der Harzlösung im Schleuderteller (Spinnlösung) von 50 bis 200, vorzugsweise 80 bis 150 Pa·s durchgeführt. Die Viskositätsangabe bezieht sich auf die Messung mit einem Kegel-Platte-Viskosimeter bei der Spinntemperatur.

Vorzugsweise wird das erfindungsgemäße Verfahren so durchgeführt, daß in der Umgebung des Schleudertellers trockene Luft vorhanden ist, die während der Durchführung des Verfahrens stetig über geeignete Zufuhrvorrichtungen zu dem sich drehenden Schleuderteller 1 geleitet wird.

Hierzu wird von oberhalb des Schleudertellers 1 her entlang der Antriebswelle mindestens ein trockener Luftstrom in Richtung des Schleudertellers 1 und nach Erreichen des Schleudertellers 1 von diesem weg nach außen geleitet.

Die erfindungsgemäß einzusetzende trockene Luft hat im allgemeinen eine Temperatur von 10 bis 50°C, vorzugsweise von 25 bis 35°C, und eine Luftfeuchte von weniger als 4 g Wasser/kg Luft, vorzugsweise 0 bis 3 g Wasser/kg Luft.

Vorzugsweise werden mindestens zwei trockene Luftströme über in unterschiedlichen Abständen von der Antriebswelle angeordnete Leitungen zugeführt, wobei die Geschwindigkeit des der Antriebswelle benachbarten Luftstromes größer ist als die Geschwindigkeit der weiter außen liegenden Luftströme. Besonders bevorzugt erfolgt die Luftzufuhr über Schächte 4 und 5, die konzentrisch in Richtung des Schleudertellers 1 angeordnet sind. Der innere Schacht 4 ist an seinem unteren Ende vorzugsweise konisch verjüngt.

Durch diese Führung der trockenen Luft wird beim Faserziehvorgang eine schnelle Abtrocknung der Fasern garantiert und außerdem der Faserflug so beeinflußt, daß die Fasern nicht verkleben.

Weiterhin wird der Faserflug durch die Verwendung von Flügeln 7 bzw. 8, die am Schleuderteller 1 befestigt sind, begünstigt. Dies ist insbesondere im Hinblick auf die Vermeidung von Verklebungen vorteilhaft.

Die Flügel 7 bzw. 8 sind am Schleuderteller befestigt und haben vorzugsweise eine Fläche von 0,5 bis 1,5 $cm^2$.

Die im erfindungsgemäßen Verfahren zum Trocknen eingesetzte Luft kann zweckmäßigerweise in einem Kreisprozeß geführt werden, wobei sie in an sich bekannter Weise an geeigneten regenerierbaren Trockenmitteln auf das gewünschte Feuchtigkeitsniveau eingestellt wird.

Die Luftströme werden vorzugsweise so eingestellt, daß 10 bis 100 kg, vorzugsweise 15 bis 50 kg trockene Luft pro kg erzeugte Fasern eingesetzt werden.

Das erfindungsgemäße Verfahren wird mit einer Vorrichtung zur Herstellung von Fasern nach dem Zentrifugalspinnverfahren mit einer Zufuhrleitung für das Harz, einem Schleuderteller und einer Antriebswelle für den Schleuderteller durchgeführt.

In einer Ausführungsform des erfindungsgemäßen Verfahrens wird die Harzlösung durch eine neben der Antriebswelle angeordnete Rohrleitung dem Schleuderteller zugeführt.

In einer bevorzugten Ausführungsform der Erfindung wird das Harz über eine Bohrung (Zufuhrleitung 3) in der Antriebswelle 2 zugeführt.

Vorzugsweise ist der Schleuderteller 1 bis auf die Austrittsöffnungen (Düsen 9) für die zu erspinnenden Fasern, die Zufuhrleitung 3 und eine Überlaufbohrung 6 vollständig geschlossen.

In einer besonders bevorzugten Ausführungsform der erfindungsgemäßen Vorrichtung ist oberhalb des Schleudertellers 1 und konzentrisch um die Antriebswelle 2 mindestens ein Schacht 4 bzw. 5 zur Luftzufuhr angeordnet.

In einer besonders bevorzugten Ausführungsform sind am Schleuderteller Flügel 7 bzw. 8 angeordnet, die vorzugsweise jeweils eine Fläche von 0,5 bis 1,5 $cm^2$ haben.

Das im erfindungsgemäßen Verfahren eingesetzte Harz liegt in der Regel in Form einer wäßrigen Lösung vor.

Erfindungsgemäß lassen sich alle nach dem Zentrifugalspinnverfahren zu Fasern verarbeitbaren duroplastischen und thermoplastischen Harze einsetzen. Vorzugsweise sind dies Polyester, Polyamide, Polyvinylalkohole und Aminoplastharze. Besonders bevorzugt werden jedoch Aminoplastharze eingesetzt.

Erfindungsgemäße Aminoplastharze sind beispielsweise Kondensationsprodukte von Harnstoff, Melamin, Benzoguanamin, Acetoguanamin, Dicyandiamid, Guanidin oder Thioharnstoffe mit Aldehyden, insbesondere mit Formaldehyd.

Bevorzugte Aminoplastharze sind Harnstoff- oder Triazin-Harze. Bei den Triazin-Harzen ist die Triazin-Komponente beispielsweise aus der Gruppe Benzoguanamin, Acetoguanamin und Melamin gewählt.

Vorzugsweise werden Melaminharze eingesetzt. Besonders bevorzugte Melaminharze sind hierbei die Kondensationsprodukte aus Melamin bzw. Melaminderivaten und Formaldehyd, wie sie beispielsweise in der EP-A-93965, EP-A-221 330 und der EP-A-408 947 beschrieben sind.

Im erfindungsgemäßen Verfahren werden besonders bevorzugt Melamin-Formaldehyd-Vorkondensat-Lösungen eingesetzt. Diese sind beispielsweise in der EP-A-355 760 beschrieben.

Vorzugsweise werden im erfindungsgemäßen Verfahren wäßrige Kondensationsprodukte aus Melamin und Formaldehyd eingesetzt, in denen 0,1 bis 70 Mol.-% des Melamins durch 1 bis 3 Hydroxyoxaalkyl-Gruppen der Formel $(CH_2-CH_2-O)_n-CH_2-CH_2-OH$ (n=1-5) substituiertes Melamin ersetzt ist. Derartige Kondensationsprodukte sind in der EP-A-408 947 beschrieben.

Des weiteren können die Melamin-Formaldehyd-Harze Phenolgruppen enthalten. Derartige Harze und ihre Herstellung durch Kondensation sind in der DE-A-41 23 050 beschrieben.

Die hergestellten Aminoplastfasern können Füllstoffe enthalten, die den Harzen vor dem Verspinnen zugegeben werden können.

Füllstoffe sind hierbei im allgemeinen faser- oder pulverförmige anorganische Verstärkungsmittel oder Füllstoffe, vorzugsweise mit Teilchengrößen von weniger als 10 μm, wie Glasfasern, Metallpulver, Metallsalze oder Silikate, z.B. Kaolin, Talkum, Schwerspat, Quarz oder Kreide, ferner Pigmente und Farbstoffe und Flammschutzmittel.

Das erfindungsgemäße Verfahren und die erfindungsgemäße Vorrichtung haben zahlreiche Vorteile.

Beispielsweise ist es möglich, auf die häufig für den Faserziehvorgang notwendigen Hilfsmittel wie z.B. Polyethylenoxid oder Polyvinylalkohol zu verzichten. Diese haben den Nachteil, daß die brandtechnischen Eigenschaften der Fasern negativ beeinflußt werden.

Die nach dem erfindungsgemäßen Verfahren hergestellten Fasern haben außerdem den Vorteil einer günstigen Längenverteilung und einer engen Verteilung der Faserdurchmesser (vorzugsweise mit einem mittleren Durchmesser von 15 μm) bei hohen Festigkeiten, wenig Verklebungen und Abwesenheit von Blasen.

Die mit dem erfindungsgemäßen Verfahren hergestellten Fasern können beispielsweise zur Herstellung von Fasermatten wie in der EP-B-80 655 beschrieben verwendet werden. Aber auch die Herstellung von Vliesen und Geweben ist vorteilhaft durchführbar.

Beispiel

Es wurden in einer Vorrichtung entsprechend der Figur elastische Fasern auf der Basis eines Melamin-Formaldehyd-Harzes hergestellt, wobei von einer homogenen wäßrigen Lösung, hergestellt aus

1791,7 g (14,22 mol) Melamin, 626,1 g einer 80 gew.-%igen, wäßrigen Lösung von HOM (= Isomerengemisch aus 10 Mol-% 5-Hydroxy-3-oxapentylamino-1,3,5-triazin, 50 Mol-% Di-(5-Hydroxy-3-oxa-pentylamino)-1,3,5-triazin und 40 Mol-% Tris-(5-Hydroxy-3-oxa-pentylamino)-1,3,5-triazin) (1,52 mol), 44,6 g (0,47 mol) Phenol, 557,9 g Paraformaldehyd, 7,0 g 2-Diethylaminoethanol und 1093,9 g einer 40 gew.-%igen wäßrigen Formaldehydlösung (hergestellt analog zu EP-A 523 485, Bsp. 3 (b))

mit einer Viskosität von 700 Pa·s bei einer Temperatur von 24°C ausgegangen wurde. Kurz vor dem Eintritt in die Spinnvorrichtung wurde als saurer Katalysator 2 Gew.-%, bezogen auf die wäßrige Lösung, Ameisensäure, 35 gew.-%ig, homogen zugemischt. Die Viskosität wurde dadurch um ca. 30 % abgesenkt. Die Dichte ρ der Spinnlösung betrug 1,36 g/cm³. Der Schleuderteller 1 hatte einen Außendurchmesser $D_a$ von 120 mm. An seinem Umfang waren 45 Düsen mit einem Durchmesser von 0,5 mm gleichmäßig angeordnet. Die Drehzahl des Schleudertellers betrug ca. 18 500 Umdrehungen pro Minute. Der gesamte Harzdurchsatz betrug 17 kg pro Stunde. Die Fasern wurden bei einem Druck von 68 bar ersponnen. Die Spinntemperatur betrug 28°C. Durch den konzentrischen Schacht 4 wurden 120 kg/h trockene Luft und durch den weiteren konzentrischen Schacht 5 80 kg/h trockene Luft zugeführt. Die trockene Luft hatte hierbei eine Temperatur von 25 bis 30°C und einen Restwassergehalt von 0 bis 1 g Wasser/kg Luft.

Die Fasern wurden auf einem Endlosband gesammelt und bei einer Temperatur von 180 bis 220°C in einem Durchlaufofen ausgehärtet. Die fertigen Fasern hatten eine glatte Oberfläche und einen textilen Griff. Ihre Festigkeit betrug 3,5 cN/dtex und ihre Dehnung 15 %, gemessen in Anlehnung an DIN 53 816.

**Patentansprüche**

1. Verfahren zur Herstellung von Fasern durch Verspinnen eines Harzes nach einem Zentrifugalspinnverfahren, dadurch gekennzeichnet, daß eine Harzlösung mit einer Viskosität von 50 bis 200 Pa·s bei der Spinntemperatur einem Schleuderteller (1) zugeführt wird und die Harzlösung im Schleuderteller (1) unter einem Druck steht, der ausreicht, daß die Düsen des Schleudertellers (1) beim Erspinnen der Fasern vollständig damit gefüllt sind.

2. Verfahren nach Anspruch 1, dadurch gekennzeichnet, daß das zu verspinnende Harz dem Schleuderteller (1) durch die Antriebswelle (2) zugeführt wird.

3. Verfahren nach Anspruch 1 oder 2, dadurch gekennzeichnet, daß die Fasern unter einem Druck p vor der Düse (9) von 10 bis 80 bar ersponnen werden, der sich gemäß Gleichung I,

$$p = 0,5 \cdot \varrho \cdot v^2 \cdot \left[ 1 - \left( \frac{D_i}{D_a} \right)^2 \right] \qquad I$$

aus der Dichte ρ der Harzlösung, der Umfangsgeschwindigkeit v, sowie dem Innendurchmesser $D_i$ und dem Außendurchmesser $D_a$ des entstehenden Flüssigketisringes im Schleuderteller (1) berechnen läßt.

4. Verfahren nach einem der Ansprüche 1 bis 3, dadurch gekennzeichnet, daß von oberhalb des Schleudertellers her entlang der Antriebswelle (2) mindestens ein trockener Luftstrom in Richtung des Schleudertellers (1) und von diesem weg nach außen geleitet wird.

5. Verfahren nach Anspruch 4, dadurch gekennzeichnet, daß mindestens zwei trockene Luftströme über in unterschiedlichen Abständen von der Antriebswelle angeordnete Leitungen zugeführt werden, wobei die Geschwindigkeit des der Antriebswelle benachbarten Luftstromes größer ist als die Geschwindigkeit der weiter außen liegenden Luftströme.

6. Vorrichtung zur Herstellung von Fasern nach einem Zentrifugalspinnverfahren mit einer Zufuhrleitung (3) für das Harz in der Antriebswelle (2) einem Schleuderteller (1) und einer Antriebswelle (2) für den Schleuderteller (1), dadurch gekennzeichnet, daß die obere Öffnung des Schleudertellers (1) dicht mit der Antriebswelle (2) verbunden ist, und der Schleuderteller (1) darüberhinaus bis auf die Austrittsöffnungen (9) für die zu erspinnenden Fasern und die Überlaufbohrungen (6) geschlossen ist und am äußeren Rand des Schleudertellers Flügel (7) bzw. (8) angeordnet sind.

7. Vorrichtung nach Anspruch 6, dadurch gekennzeichnet, daß oberhalb des Schleudertellers und konzentrisch um die Antriebswelle mindestens ein Schacht (4) für die Zuführung der trockenen Luft angeordnet ist.

**Claims**

1. A process for producing fibers by spinning a resin by a centrifugal spinning process, which comprises supplying a resin solution having a viscosity from 50 to 200 Pa.s at the spinning temperature to a whirler plate (1) and ensuring that inside the whirler plate (1) the resin solution is under a sufficient pressure to completely fill the nozzles of the whirler plate (1) as the fibers are being spun.

2. A process as claimed in claim 1 wherein the resin to be spun is supplied to the whirler plate (1) by the driveshaft (2).

3. A process as claimed in claim 1 or 2 wherein the fibers are spun under a pressure p upstream of the nozzle (9) from 10 to 80 bar calculable by equation I

$$p = 0,5 \cdot \varrho \cdot v^2 \cdot \left[ 1 - \left( \frac{D_i}{D_e} \right)^2 \right] \qquad I$$

from the density ρ of the resin solution, the circumferential speed v and the internal diameter $D_i$ and the external diameter $D_e$ of the liquid ring formed in the whirler plate (1).

4. A process as claimed in any of claims 1 to 3 wherein at least one dry air stream is passed from above the whirler plate along the driveshaft (2) in the direction of the whirler plate (1) and away from there toward the outside.

5. A process as claimed in claim 4 wherein at least two dry air streams are passed through lines disposed at different distances from the driveshaft, the velocity of the air stream adjacent to the driveshaft being greater than the velocity of the air streams further away.

6. Apparatus for producing fibers by a centrifugal spinning process, comprising a supply line (3) for the resin in the driveshaft (2), a whirler plate (1) and a driveshaft (2) for the whirler plate (1), wherein the upper opening of the whirler plate (1) is sealingly connected to the driveshaft (2) and in addition the whirler plate (1) is closed except for the exit openings (9) for the fibers to be spun and the overflow holes (6) and the outer edge of the whirler plate is equipped with wings (7) and (8).

7. Apparatus as claimed in claim 6 wherein at least one shaft (4) for supplying the dry air is arranged above the whirler plate and concentrically around the driveshaft.


**Revendications**

1. Procédé pour la fabrication de fibres par filage d'une résine par le procédé de filage centrifuge, caractérisé en ce qu'une solution de résine d'une viscosité de 50 à 200 Pa.s à la température de filage est amenée à un plateau de centrifugation (1), et la solution de filage dans le plateau de centrifugation (1) est placée sous une pression qui suffit pour que les ajutages du plateau de centrifugation (1) soient entièrement remplis de résine lors du filage des fibres.

2. Procédé selon la revendication 1, caractérisé en ce que la résine à filer est apportée au plateau de centrifugation (1) par l'arbre d'entraînement (2).

3. Procédé selon les revendications 1 ou 2, caractérisé en ce que les fibres sont filées sous une pression p en amont des ajutages (9) de 10 à 80 bars, laquelle pression est calculée conformément à l'équation I

$$p - 0{,}5.\rho.v^2 . [1-(D_i/D_a)^2] \hspace{4cm} I$$

à partir de la densité $\rho$ de la solution de résine, de la vitesse périphérique v ainsi que du diamètre intérieur $D_i$ et du diamètre extérieur $D_a$ de l'anneau liquide qui s'établit dans le plateau de centrifugation (1).

4. Procédé selon l'une des revendications 1 à 3, caractérisé en ce qu'au moins un écoulement d'air sec est guidé depuis le dessus du plateau de centrifugation, le long de l'arbre d'entraînement (2), en direction du plateau de centrifugation (1) et depuis celui-ci en direction de l'extérieur.

5. Procédé selon la revendication 4, caractérisé en ce qu'au moins deux écoulements d'air sec sont amenés par des conduites disposées à des distances différentes de l'arbre d'entraînement, la vitesse de l'écoulement d'air voisin de l'arbre d'entraînement étant supérieure à la vitesse des écoulements d'air situés plus à l'extérieur.

6. Dispositif pour la fabrication de fibres par le procédé de filage centrifuge, comportant une conduite d'amenée (3) pour la résine, disposée dans l'arbre d'entraînement (2), d'un plateau de centrifugation (1) et d'un arbre d'entraînement (2) du plateau de centrifugation (1), caractérisé en ce que l'ouverture supérieure du plateau de centrifugation (1) est reliée de manière étanche à l'arbre d'entraînement (2), et en outre le plateau de centrifugation (1) est fermé jusqu'aux ouvertures de sortie (9) des fibres à filer et des alésages de débordement (6), et des ailettes (7) et (8) sont disposées sur le bord extérieur du plateau de centrifugation.

7. Dispositif selon la revendication 6, caractérisé en ce qu'au moins un puits (4) pour l'amenée de l'air sec est disposé au-dessus du plateau de centrifugation et concentriquement autour de l'arbre d'entraînement.